# EUROPEAN PATENT APPLICATION

(11) **EP 4 647 532 A2**
(43) Date of publication of application: **12.11.2025**
(21) Application number: 25170823.6
(22) Date of filing: 15.04.2025
(51) Int. Cl.: C25B 1/00, C25B 1/04, C25B 15/021

(54) **COOLING SYSTEM FOR AN ELECTROCHEMICAL PLANT**

(30) Priority: 15.04.2024 US 202463634271 P; 18.03.2025 US 202519083206
(71) Applicant: Electric Hydrogen Co., Devens, Massachusetts 01434 (US)
(72) Inventor: Buchman, Michael, San Jose, CA, 95134 (US); Ebner, Curt C., San Jose, CA, 95134 (US); Long-Innes, Ryan, San Jose, CA, 95134 (US); May, Christopher, San Jose, CA, 95134 (US)
(74) Representative: Knöner, Gregor

(57) **Abstract**

The present disclosure advantageously provides an improved cooling system for an electrochemical plant. The configurations disclosed herein provide advantages and improvements in a cooling system for the electrochemical plant. The cooling system advantageously cools multiple subsystems within the plant using dry coolers, thereby easing maintenance and access to various components within the plant, minimizing or reducing the amount of process piping within the plant used to cool the multiple subsystems, and reducing the complexity of the overall plant.

## Description

The present patent document claims the benefit of United States Provisional Patent Application No. 63/634,271, filed April 15, 2024, which is hereby incorporated by reference in its entirety.

### FIELD

The following disclosure relates to an electrochemical plant, and in particular for a high-capacity electrochemical plant having adaptable or interchangeable cooling modules with a plurality of dry coolers to cool various subsystems within the plant.

### BACKGROUND

Electrolyzer systems use electrical energy to drive a chemical reaction. For example, water is split to form hydrogen and oxygen. The products may be used as energy sources for later use. In recent years, improvements in operational efficiency have made electrolyzer systems competitive market solutions for energy storage, generation, and/or transport. For example, the cost of generation may be below $6 per kilogram of hydrogen in some cases. Increases in efficiency and/or improvements in operation will continue to drive installation of electrolyzer systems.

Conventional electrolysis plants are commonly designed to function within power levels ranging from 1 to 20 megawatts (MW), necessitating effective cooling to provide smooth plant operation. In conventional large-scale electrolysis plants, the prevalent method for heat removal involves employing a sizable evaporative cooler. However, in regions facing water scarcity, the cost of water for evaporative cooling can become expensive and negatively affect the economics of a large electrolyzer facility.

### SUMMARY

The invention is defined in the independent claims. The dependent claims describe embodiments of the invention.

In one embodiment, a cooling system for an electrochemical plant includes one or more cooling modules, each cooling module including a plurality of dry coolers configured to transfer process water or coolant and reject waste heat generated in a plurality of separate modules of the electrochemical plant. The cooling system further includes a manifold configured to connect the plurality of dry coolers in the one or more cooling modules in parallel, the manifold comprising at least one fluid inlet and at least one fluid outlet. The one or more cooling modules are configured to transfer process water to each module of the plurality of separate modules of the electrochemical plant. The one or more cooling modules are further configured to receive the process water from each module of the plurality of separate modules and reject the waste heat collected by the process water received from each module of the plurality of separate modules to a surrounding environment.

In a non-limiting example, the cooling system may include two or more respective cooling modules, e.g. plural cooling modules.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

Exemplary embodiments are described herein with reference to the following drawings.
Figure 1A depicts an example of an electrochemical or electrolytic cell.
Figure 1B depicts an example of a system including an electrochemical stack having a plurality of electrochemical cells of Figure 1A.
Figure 2 depicts an example of an electrochemical plant.
Figure 3 depicts an additional example of an electrochemical plant.
Figures 4 and 5 depict examples of a cooling system of an electrochemical plant.
Figure 6 depicts a flow chart explaining a method of cooling an electrochemical plant using a cooling system.
Figure 7 depicts a flowchart describing a method for cooling a cathode side and an anode side of a plurality of electrochemical stacks of an electrolysis module of an electrochemical plant using another embodiment of a cooling system.
Figure 8 depicts an example communication system between a cooling system and a computing device having a controller over a connected network.
Figure 9 depicts an example of a computing device having a controller.

### DETAILED DESCRIPTION

The present disclosure advantageously provides an improved electrochemical plant operating multiple subsystems using an improved cooling system to efficiently cool all modules or subsystems of the plant. The configurations disclosed herein provide advantages and improvements in a cooling system for the electrochemical plant. The cooling system advantageously cools multiple subsystems within the plant using dry coolers thereby easing maintenance and access to various components within the plant, reducing the amount of water needed to cool a plant, and reducing the complexity of the overall plant.

The present disclosure also advantageously provides an improved modular cooling system having components configured to be flexibly interchanged, therein allowing for the different coolers (i.e., dry or wet coolers) to be added to or switched out of the cooling system depending on the economic restraints at the electrochemical plant site (e.g., fluctuations in the cost of water for cooling).

Additionally, the present disclosure advantageously provides a cooling system that cools multiple subsystems within the plant using one unified cooling loop thereby easing maintenance and access to various components within the plant, minimizing or reducing the amount of process piping within the plant used to cool the multiple subsystems, and reducing the complexity of the overall plant.

Additionally, the present disclosure advantageously provides a cooling system configured to operate using a higher temperature coolant for a same net head load.

### Electrochemical Cells/Stacks

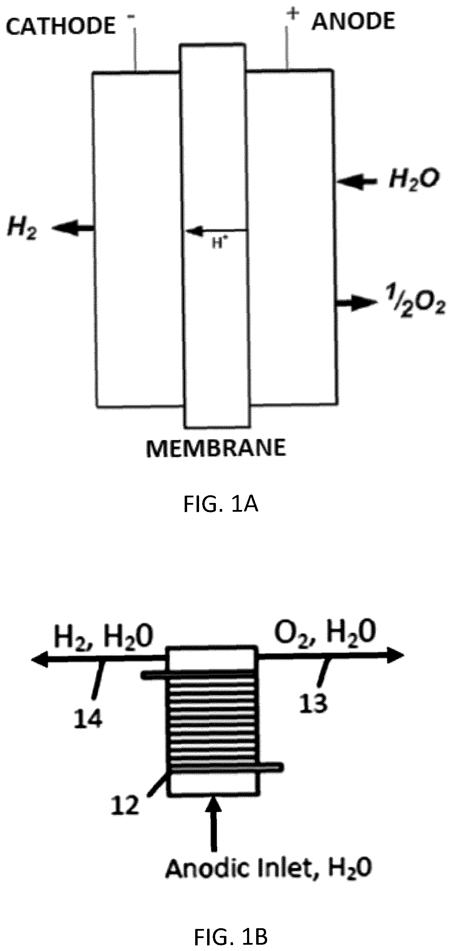

Figure 1A depicts an example of an electrochemical cell for the production of hydrogen gas and oxygen gas through the splitting of water. The electrochemical cell includes a cathode, an anode, and a membrane positioned between the cathode and anode. Within the water-splitting electrolysis reaction, one interface runs an oxygen evolution reaction (OER) while the other interface runs a hydrogen evolution reaction (HER). For example, the anode reaction is H₂O→2H⁺+½O₂+2e and the cathode reaction is 2H⁺+2e→H₂. The water electrolysis reaction has recently assumed great importance and renewed attention as a potential foundation for a decarbonized "hydrogen economy."

Figure 1B depicts an example of a system including an electrochemical stack having a plurality of electrochemical cells of Figure 1A. In certain examples, the electrochemical stacks may contain 50-1000 cells, 50-100 cells, 500-700 cells, or more than 1000 cells. Any number of cells may make up a stack. The electrochemical cells within the electrochemical stack may be configured to operate with 200 mV or less of pure resistive loss when operating at a high current density (e.g., at least 3 Amps/cm², at least 4 Amps/cm², at least 5 Amps/cm², at least 6 Amps/cm², at least 7 Amps/cm², at least 8 Amps/cm², at least 9 Amps/cm², at least 10 Amps/cm², at least 11 Amps/cm², at least 12 Amps/cm², at least 13 Amps/cm², at least 14 Amps/cm², at least 15 Amps/cm², at least 16 Amps/cm², at least 17 Amps/cm², at least 18 Amps/cm², at least 19 Amps/cm², at least 20 Amps/cm², at least 25 Amps/cm², at least 30 Amps/cm², in a range of 1-30 Amps/cm², in a range of 3-20 Amps/cm², in a range of 3-15 Amps/cm², in a range of 3-10 Amps/cm², or in a range of 10-20 Amps/cm²). In additional examples, the amount of water (e.g., deionized (DI) water) transferred to or circulated through each cell of the stack may be in a range of 0.25-1 mL/Amp/cell/min, in a range of 0.25-5 mL/Amp/cell/min, or in a range of 0.5-1 mL/Amp/cell/min.

As illustrated in the system of Figure 1B, water (H₂O) may be supplied to the anodic inlet of an electrolytic cell stack 12. In some embodiments, only the anodic inlet of the cell stack 12 may receive water. In these embodiments, the cathode side of the cell stack 12 may not receive water (e.g., a dry cathode side may be used). In another embodiment, a cathode inlet may also receive water, wherein the water may be supplied to the cathode Inlet to cool the cell stack 12 during electrolysis.

The water supplied to the anodic inlet flows to an anodic inlet manifold that distributes the water to the anode side of the plurality of cells contained with the cell stack 12. In embodiments where water is supplied to the cathode inlet, water supplied to the cathode inlet flows to a cathodic inlet manifold that distributes the water to the cathode side of the plurality of cells in the cell stack 12.

During electrolysis, oxygen (O₂) is produced at the anode side of the electrolytic cells and hydrogen (H₂) is produced at the cathode side of the electrolytic cells. Specifically, a water splitting electrolysis reaction is configured to take place within each individual cell in the cell stack 12. Each cell includes one interface (the anode side of the cell) configured to run an oxygen evolution reaction (OER) and another interface (the cathode side of the cell) configured to run a hydrogen evolution reaction (HER), such as depicted in Figure 1A.

During electrolysis, some of the water supplied to the anode side of an electrolytic cell may not be converted into oxygen. Accordingly, a two-phase flow of oxygen and unreacted water is outlet from each of the anode sides of the cells into an anodic outlet manifold 13. The two-phase flow of oxygen and unreacted water flows from out of the cell stack 12 through the anodic outlet manifold 13.

Additionally, as noted above, in some embodiments, water may be supplied to the cathode side of the cell stack as a coolant. Accordingly, a two-phase flow of hydrogen and water is outlet from each of the cathode sides of the cells to a cathodic outlet manifold 14. The two-phase flow of hydrogen and water flows out of the cell stack 12 through the cathodic outlet manifold 14.

### Electrochemical Plant

The electrochemical cells and stacks discussed within Figures 1A and 1B may be incorporated into an electrochemical plant having one or more electrochemical stacks (e.g., a plurality of electrochemical stacks).

The one or more electrochemical stacks may be used in the formation of a large-scale electrochemical plant that may be configured to generate at least 1,000 kg/day, at least 5,000 kg/day, or at least 10,000 kg/day of hydrogen gas using continuous operation. In certain examples, the hydrogen gas generated in the electrochemical stacks may be aggregated and supplied to an end user/customer with a purity of at least 98% at a pressure of at least 5 atm, at least 10 atm, at least 15 atm, or at least 20 atm.

In other embodiments, the one or more electrochemical stacks may be used in the formation of a large-scale electrochemical plant that may be configured to consume at least 10 megawatts (MW) of power, at least 25 MW, at least 50 MW, at least 75 MW, at least 100 MW, 10-100 MW, 25-100 MW, or 50-100 MW.

The one or more electrochemical stacks may be incorporated within an electrochemical plant configured for this large-scale power generation.

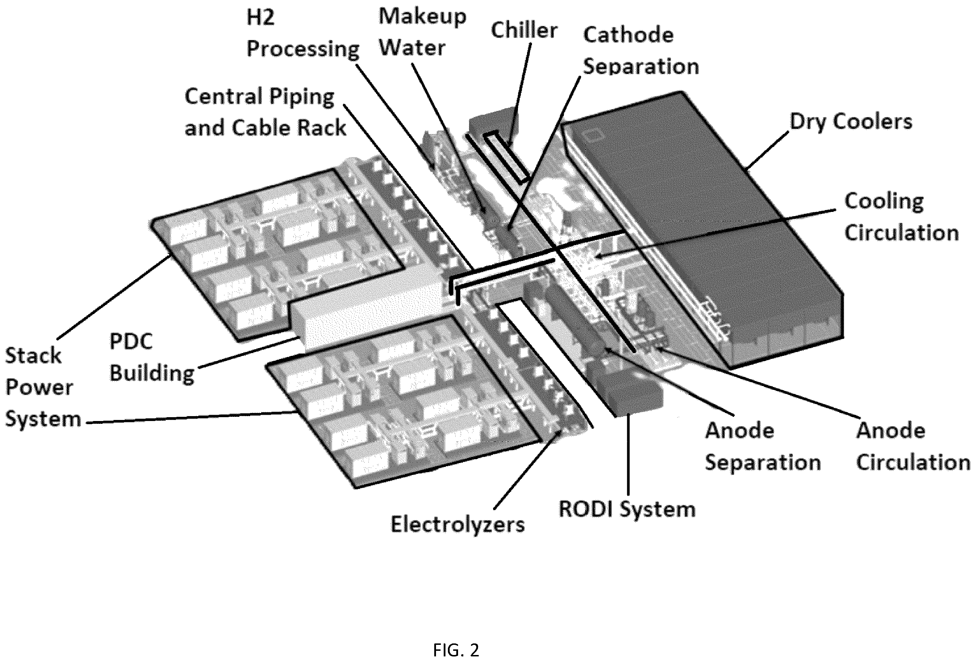

Figure 2 depicts one example of an electrochemical plant. In this particular example, the electrochemical plant is arranged or positioned in four distinct sections or segments. Specifically, the figure identifies a power supply section, an electrochemical stack section, a process equipment section, and a cooling section. The cooling section includes an embodiment of a cooling system of the present disclosure that is discussed further below. Each section may advantageously include one or more modules. Centralized piping and electrical cables may be provided within this configuration to connect various modules to each other.

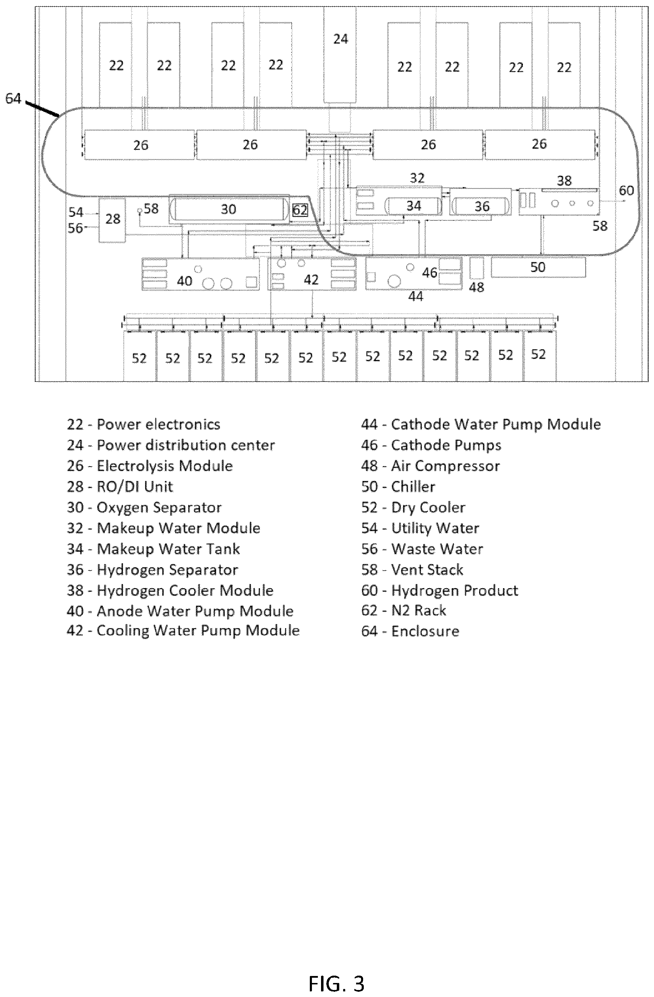

Figure 3 depicts another example of an electrochemical plant. Similar to the example in Figure 2, this electrochemical plant includes four distinct sections or segments: a power supply section, an electrochemical stack section, a process equipment section, and a cooling section including an embodiment of a cooling system of the present disclosure, which is discussed further below. Each section may advantageously include one or more modules.

In this particular example, the electrochemical plant includes four power supply modules positioned in a linear arrangement. Each power supply module includes two power supply units with centralized connections between the two units configured to supply power to a load (e.g., an electrochemical stack, a processing unit, or a cooling unit within the plant). Additional or fewer power supply units may be developed/built with each power supply module.

The power supply units within the power supply modules may be connected to and receive energy from the power grid or a renewable energy power source (e.g., a solar plant, windfarm, fuel cell array). In certain examples, each power supply module and the plurality of power supply units within the power supply modules may be connected to a single input source of power.

The power supply modules may further include one or more medium voltage transformers rated in a range of 1 - 70 kV and one or more AC-to-DC power converters. For example, the transformers may be configured to convert 6.25 MW of 34.5 kV AC to 820 V AC to feed the AC-to-DC power converters. The power converters may then transfer DC power through busbars to the electrochemical stack section.

In various implementations, the power supply modules may further include a rectifier and/or inductor to support adaptation of power from the power grid and provide power to a plurality of electrochemical stacks connected in series.

In certain examples, the power supply section of the electrochemical plant may further include a power distribution center or building. The power distribution center may be positioned in a central location between two power supply modules in the linear arrangement of the power supply section of the plant. The power distribution center may include one or more motor control centers, process logic controllers, and operator stations, wherein the power distribution center is configured to control the power distribution to the electrochemical stacks and the operation of the electrochemical stack section, process equipment section, and cooling section.

As depicted in Figure 3, the electrochemical plant may include a plurality of electrolysis modules 26 positioned in a linear arrangement in the center of the plant for ease of deployment or for capacity additions. Fewer or more modules may be present within the plant. Further, as shown in Figure 3, the electrolysis modules 26 may be positioned adjacent to the power supply modules 22. In this particular example, one electrolysis module is configured to be connected to and receive power from a single power supply module. Alternative arrangements are also possible wherein two power supply modules provide power to a single electrolysis module, or a single power supply module provides power to two electrolysis modules.

In this particular example, each electrolysis module 26 includes four separate electrochemical stacks. Fewer or more stacks may be present for a particular module.

In this particular example, centralized piping and electrical cables may be present within each module and between the various electrolysis modules. For example, a first electrolysis module 26 may have shared piping distributing the inlet water to the various stacks as well as shared piping for collecting/transferring the produced hydrogen and shared piping for collecting/transferring the produced oxygen from the stacks. In one example, four stacks within a single electrolysis module 26 may be connected and fed with single continuous manifold and are capable of generating at least 1,000 kg/day, at least 5,000 kg/day, or at least 10,000 kg/day of hydrogen gas using continuous operation.

Further, shared and centrally located electrical cables may be provided from a power supply module 22 adjacent to the respective stack module.

In certain examples, a minimized amount of piping may be configured to attach one electrolysis module with an additional, adjacent electrolysis module.

Returning to Figure 3, the electrochemical plant may further include a process equipment section or segment of the plant that may be positioned in a linear arrangement between the electrochemical stack section and the cooling section. The process equipment section, like the other sections of the plant, may include one or more processing modules.

For example, the process equipment section may include various modules such as an anode/cathode gas separation module, a hydrogen product processing module, a feed water treatment module, and/or a process water heat exchange and pumping module. Fewer or additional modules may also be included, depending on the overall size of the plant. In certain examples, the hydrogen product processing module may be developed to include a condenser, a water knockout drum and coalescing filter, allowing for high hydrogen purity to be achieved without a need for a dedicated dryer module.

As depicted in Figure 3, the process equipment section of the electrochemical plant may include a RO/DI (reverse osmosis/deionization) unit 28 configured to receive utility water 54 and send off waste water 56, an oxygen separator 30, a makeup water module 32, a makeup water tank 34, a hydrogen separator 36, a hydrogen cooler module 38, an anode water pump module 40, a cooling water pump module 42, a cathode water pump module 44, cathode pumps 46, an air compressor 48, a chiller 50, one or more vent stacks 58, and a nitrogen rank 62, for example.

An additional module may be associated with the makeup water tank configured to receive the treated water from the RO/DI module and provide water to the anode and cathode gas separators for distribution to the electrochemical stacks. In some examples, the anode gas separator has a volume or capacity of at least 12,000 liters, and the cathode gas separator has a volume or capacity of at least 3,500 liters. With such capacities, the anode and cathode separators may be configured to process or accommodate an electrochemical plant configured to generate or produce at least 10,000 kg/day of hydrogen gas. In certain examples, the hydrogen gas generated in the electrochemical plant may be aggregated and supplied to an end user/customer with a purity of at least 98% at a pressure of at least 5 atm, at least 10 atm, at least 15 atm, or at least 20 atm.

Additional modules within the process equipment section of the plant may be configured to provide anode water and cooling water to the electrochemical stacks and receive anode product (e.g., water and oxygen gas) from the stacks.

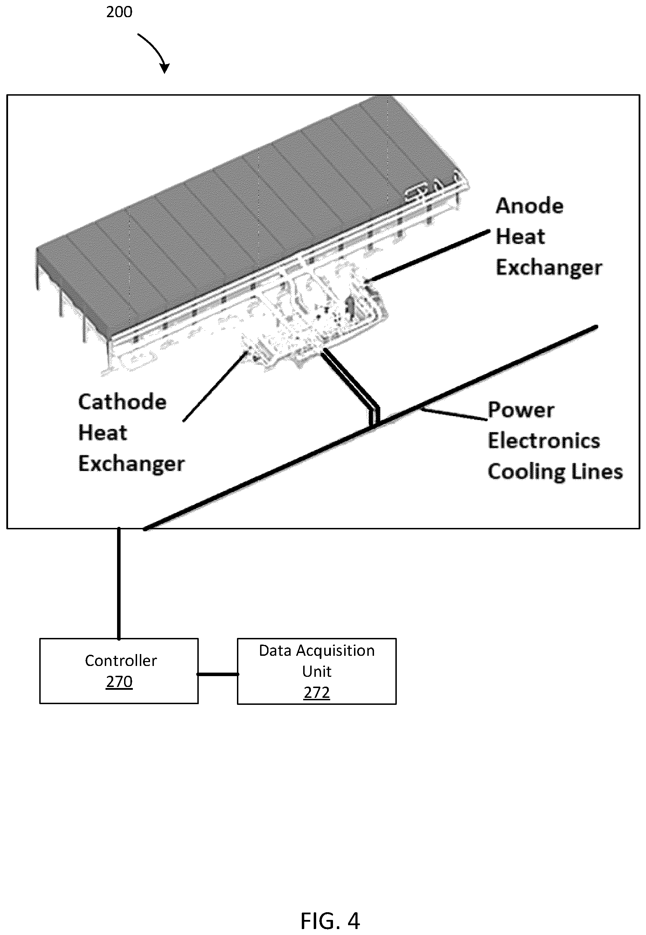

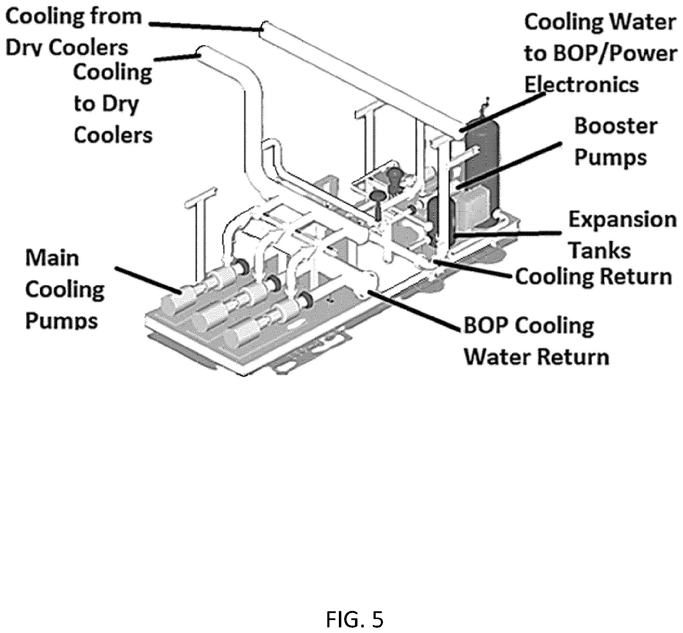

Returning back to Figure 3, the electrochemical plant further includes a cooling section or segment of the plant that may be positioned in a linear arrangement adjacent to the process equipment section. The cooling section of the plant may include an embodiment of a cooling system according to the present disclosure. The cooling system may advantageously use a single loop to cool any of the above-mentioned modules of the plant. Embodiments of the cooling system according to the present disclosure are described below with reference to Figures 4 and 5.

### First Embodiment of A Cooling System For An Electrochemical Plant

Figures 4 and 5 depict an embodiment of a cooling system 200 for an electrochemical plant according to the present disclosure.

The cooling system 200, as depicted in Figures 4 and 5, includes one or more cooling modules, a manifold, and at least one cooling loop (e.g., in some cases, a single cooling loop). Each cooling module includes a plurality of dry coolers configured to transfer coolant and/or water and reject waste heat generated in a plurality of separate modules of the electrochemical plant. The plurality of separate modules may be any of the above-mentioned modules. However, in these depicted examples, the plurality of separate modules includes an electrolysis module, and a power supply module.

In certain examples, a cooling module of the one or more cooling modules may include a plurality of wet coolers or a combination of dry and wet coolers configured to transfer coolant and/or water and reject waste heat generated in a plurality of separate modules of the electrochemical plant.

The one or more cooling modules may be configured to be manufactured off-site, delivered to the site, and installed/connected to the surrounding equipment with minimal or reduced on-site labor. Centralized piping and electrical cables may be provided within this modular configuration to connect various modules to each other.

The size of the cooling modules may be designed to be positioned on a skid and transported from the manufacturing site to the plant site via truck. In such instances, the maximum size of an individual module may be 3.65 meters wide by 3.65 meters tall by 14.63 meters long (12 feet wide by 12 feet tall by 48 feet long). In other examples, the maximum size of an individual module may be 4.27 meters wide by 4.27 meters tall by 18.29 meters long (14 feet wide by 14 feet tall by 60 feet long). Additionally, the overall weight of the module and truck/trailer may be limited to 36,287 kg (80,000 pounds) or 54,431 kg (120,000 pounds).

The cooling modules may be manufactured off-site or procured from an offsite manufacturing facility as a standardized off-the-shelf module. The modules may include components that are attached to or welded to structural elements (e.g., I-beams), which may be powder coated to provide corrosion resistance. Additionally, mesh grates may be positioned over the structure to allow an operator to stand and work on the module.

The cooling system 200 may also be configured to accommodate additional coolers or modules. In other words, the cooling system is configured to allow it to readily incorporate or integrate additional cooling modules as needed. This adaptability feature of the system 200 enables users to enhance the cooling capacity or make adjustments based on specific operational requirements or changes in the electrochemical plant's thermal dynamics or based upon the needs of a specific installation site. For example, electrochemical plants installed at higher altitudes or operating at higher ambient temperature conditions may have additional cooling modules or coolers added in series with minimal effort. By accommodating additional cooling modules, the cooling system provides scalability, efficiency, and the ability to address varying heat loads, contributing to an optimized and responsive cooling solution tailored to the dynamic needs of the electrochemical processes within the plant.

The cooling system 200 also includes a manifold. The manifold is configured to connect the plurality of dry coolers in the cooling modules in parallel. The manifold includes at least one fluid inlet and at least one fluid outlet through which coolant or process water may flow through to the one or more cooling loops. In certain examples, the cooling system 200 includes a single coolant loop configured to feed a coolant/water to all the systems/modules within the electrochemical plant (e.g., anode, cathode, rectifier, etc.). In other examples, the cooling system 200 includes multiple coolant loops configured to feed each system/module individually or configured to feed a subset of systems/modules within the plant.

The cooling system 200 also includes a pipe header positioned between the manifold and the cooling loop. The cooling modules are configured to be either connected to or disconnected from the pipe header such that the cooling modules may be interchangeable. In other words, the cooling modules are configured to allow for seamless fluid connection or disconnection from the pipe header, enabling the interchangeability of cooling modules, and individual dry or wet coolers within cooling modules. This feature advantageously facilitates swift and effortless replacement of the entire number of cooling modules or individual cooling modules, accommodating the adoption of alternative cooling technologies with minimal disruption.

As mentioned above, the cooling system 200 includes a cooling loop. The cooling loop includes cooling lines configured to provide fluid communication between the cooling modules and each module of the plurality of separate modules within the electrochemical plant. The plurality of dry or wet coolers within the cooling modules may be connected (e.g., in parallel) to the singular manifold.

In this example, the cooling lines of the cooling loop are configured to connect to the cooling fluid inlet and the cooling fluid outlet of the manifold with each module of the plurality of separate modules within the electrochemical plant.

In certain examples, the cooling loop may also include one or more pressure regulators (not illustrated) and flow control valves (not illustrated), configured to control the coolant/water flowing through the cooling loop such as to balance the flow and/or prevent over pressurization in the cooling loop. The cooling loop may also include one or more sensors (not illustrated) to measure the pressure and/or temperature of the coolant/water flowing through the cooling lines.

In certain examples, the cooling system 200 may also include at least one pump configured to adjust (e.g., raise) a pressure of the coolant/water flowing through the cooling loop. In this depicted example, the cooling system 200 includes power electronics cooling booster pumps configured to raise a pressure of the coolant/water flowing through the cooling loop to the power supply module. The cooling system 200 also includes main cooling pumps configured to raise a pressure of the coolant/water flowing into the cooling module. However, any number of pumps may be used, and the present disclosure is not limited to the power electronics cooling booster pumps and the main cooling pumps.

In certain examples, the cooling system 200 may also include an expansion tank in fluid connection with the cooling loop. The expansion tank is configured to act as a buffer to absorb the excess pressure during expansion and provide additional fluid during contraction. In this depicted example, only one expansion tank is provided, however any number of expansion tanks may be used in the cooling system 200.

In certain examples, the cooling system 200 may further include a controller 270 and a data acquisition unit 272. The controller 270 is in communication with the pressure sensors, the flow control valves, the pressure regulators, the pumps, and any additional sensors within the system. The data acquisition unit 272 may be operable to measure, monitor, and/or receive system data in real-time.

For example, the controller 270 may be configured to control a pressure of the coolant/water flowing through the cooling lines via an adjustment to at least one pressure regulator of the cooling loop. The controller 270 may further be configured to control a flow rate of the coolant/water flowing through the cooling lines via an adjustment to at least one flow control valve of the cooling loop. The controller 270 may also be configured to control the pumps to pressurize the coolant/water in the cooling loop.

In certain examples, one or more control valves within the cooling loop may be configured to control a flow rate of the coolant/water entering and/or leaving the plurality of coolers of the cooling modules. The flow rate of the coolant/water entering and/or leaving the coolers may be any configurable flow rate taking into consideration the operating parameters of the electrochemical system. In certain examples, the flow rate may be at least 0.1 liters/minute (L/min), at least 1 L/min, at least 10 L/min, at least 100 L/min, at least 200 L/min, at least 1000 L/min, at least 2000 L/min, in a range of 0.1-2000 liters per minute (L/min), 10-2000 L/min, 100-2000 L/min, 0.1-200 L/min, 1-200 L/min, 10-200 L/min, 0.1-1000 L/min, 1-1000 L/min, or 10-1000 L/min.

Furthermore, a pressure sensor may be configured to transmit the pressure reading to the data acquisition unit 272 and the data acquisition unit 272 may then transmit the information to the controller 270 so that the pressure within the cooling lines may be controlled. In other words, a controller in communication with the pressure sensor may be configured to send a signal to either the pressure regulator or flow control valve to open the valve (partially or fully) when the pressure reading exceeds a predefined threshold level. Additionally, the controller 270 may be configured to send a signal to either the pressure regulator or flow control valve to close the valve (partially or fully) when the pressure level drops below a predefined threshold level.

The controller 270 is further configured to regulate the flow rate of the coolant/water within the cooling loop for the purpose of cooling the various distinct modules within the electrochemical plant. For instance, the controller 270 can receive data from sensors placed along the cooling loop. Using this data, the controller 270 determines the optimal temperature and pressure needed for effectively cooling both the plurality of separate modules, e.g., using a minimum amount of energy consumption in the cooling process. In other words, the cooling system is configured to operate at the determined optimal temperature needed for cooling both the electrolysis module and the power supply module.

Subsequently, the controller 270 fine-tunes the pressure and temperature of the coolant/water, using the pressure regulators and control valves, based on the identified optimal temperature and pressure before supplying the coolant/water to each individual module connected to the cooling loop. Moreover, the controller 270 has the capability to adjust the characteristics of the coolant or water, utilizing pressure regulators and control valves, to provide a consistent coolant temperature and pressure provided to each module.

In certain examples, the cooling loop is configured to provide coolant/water to the plurality of modules from the plurality of coolers at a coolant temperature in a range of 20-50°C, in a range of 20-40°C, or in a range of 30-50°C. Further, the same cooling loop is configured to receive coolant/water from the plurality of modules at the plurality of coolers at a coolant temperature in a range of 50-90°C, in a range of 50-80°C, in a range of 50-70°C, in a range of 60-90°C, in a range of 60-80°C, or in a range of 70-90°C. Through the coolers, the coolant temperature is configured to be lowered to a desired temperature to effectively cool the plurality of modules in the next cycle or circulation of coolant/water. As such, the coolant temperature exiting from the plurality of coolers needs to be low enough to provide the desired heat exchange with the plurality of modules but should not be too low that unnecessary or excess energy is being used within the plurality of coolers to facilitate the temperature decrease of the coolant/water. Therefore, a maximum or optimal target temperature for the coolant/water leaving the coolers should be identified that can provide effective cooling while minimizing energy/operating costs.

For example, if the electrolysis module operates most efficiently at a maximum temperature of 50°C and a pressure of 2 atm to effectively cool the module, while the power supply module requires a maximum temperature of 40°C and a pressure of 1.5 atm to effectively cool the module, the controller 270 may identify these as the critical parameters and determine the optimal temperature/pressure to supply coolant/water to both modules is at a maximum temperature of 40°C and a pressure of 1.5 atm, such that both modules are effectively cooled.

The controller 270 then dynamically adjusts the pressure and temperature of the coolant/water in the cooling loop to meet these specific requirements before distributing the coolant/water to each module. The controller thus provides that the electrolysis module receives coolant/water at 40 °C and 1.5 atm, and the power supply module also receives coolant/water at 40 °C and 1.5 atm.

Additionally, the controller 270 utilizes pressure regulators and control valves to fine-tune the characteristics of the coolant/water throughout the process, therein providing a similar or set temperature and pressure to each of the various modules for optimal performance of both the electrolysis and power supply modules.

This dynamic controller helps maximize the efficiency of the electrochemical plant by tailoring the coolant/water conditions based on real-time data and specific operational requirements of each module.

Referring back to Figures 4 and 5, the cooling modules are configured to transfer the coolant/water via the coolant loop to each module of the plurality of separate modules of the electrochemical system. Additionally, the cooling modules are configured to receive, via the cooling loop, the coolant/water from each module of the plurality of separate modules and reject the waste heat collected by the coolant/water received from each module of the plurality of separate modules to a surrounding environment.

In this depicted example, the cooling loop is configured to be in fluid communication with the electrolysis module. The electrolysis module may include one or more electrochemical stacks (e.g., a plurality of electrochemical stacks). The plurality of electrochemical stacks are connected via a same cathode heat exchanger and a same anode heat exchanger that are configured to be in fluid communication with the cooling modules and the power supply module via the cooling lines. Additionally, the plurality of electrochemical stacks are connected via a same anode inlet water supply and a same anode outlet water supply.

In certain examples the electrolysis module may include one or more electrochemical stacks (e.g., a plurality of electrochemical stacks). The plurality of electrochemical stacks are connected via a same cathode heat exchanger and a same anode heat exchanger that are configured to be in fluid communication with the cooling modules and the power supply module via the cooling lines.

Additionally, in this depicted example, the cooling loop is configured to be in fluid communication with the power supply module. The power supply module may include one or more medium voltage transformers rated in a range of 1 - 70 kV, one or more AC-to-DC power converters, and one or more rectifiers configured to provide power to the electrolysis module of the electrochemical plant.

Referring to Figure 5, the plurality of dry or wet coolers within the cooling modules may be connected (e.g., in parallel) to the manifold. A cooling line from the singular manifold is configured to transfer coolant/water to the anode heat exchanger, and the cathode heat exchanger (i.e., the balance of power (BOP)), which are connected to the plurality of electrochemical stacks. The cooling line from the singular manifold is also configured to transfer coolant/water to the power electronics cooling lines. The coolant/water is then received through the BOP cooling water return and transferred along the cooling line to the singular manifold connecting the plurality of dry or wet coolers within the cooling modules. As a result, the cooling system 200 advantageously employs a singular cooling loop to cool multiple modules within an electrochemical plant using the same coolant/water at comparable temperature and pressure, thereby streamlining the overall cooling system complexity.

Additionally, although the cooling system 200 employs a singular cooling loop, multiple cooling loops may also be used to cool the electrochemical plant.

### A Second Embodiment of A Cooling System For An Electrochemical Plant

**In** a second embodiment of a cooling system 200 for an electrochemical plant, the manifold may further include cathode and anode fluid inlets, and cathode and anode fluid outlets, through which water may flow through respective cathode and anode cooling loops.

In other words, the cooling system 200 may also include a cathode cooling loop (not illustrated) and an anode cooling loop (not illustrated) to replace the cathode heat exchanger and the anode heat exchanger. The cathode cooling loop and the anode cooling loop may be configured to be in fluid communication with the cooling modules via the respective cooling lines of the cathode and anode cooling loops. The respective cooling lines of the cathode and anode cooling loops are configured to be connected to respective cathode and anode fluid inlets and outlets of the manifold. Processed water may flow from the electrochemical stacks, via respective cathode and anode cooling loops, to the cooling module. The dry coolers of the cooling modules may be configured to transfer water and reject waste heat generated from the electrochemical stacks in the electrolysis module in addition to transferring coolant/water and rejecting waste heat generated in the plurality of separate modules of the electrochemical plant.

In this example, the cathode loop and the anode loop (i.e., the loops) may also include one or more pressure regulators (not illustrated) and flow control valves (not illustrated). The one or more pressure regulators and flow control valves may be configured to control the respective water flowing through the cathode and anode cooling loops such as to balance the flow and/or prevent over pressurization in the loops. The loops may also include one or more sensors (not illustrated) to measure the pressure and/or temperature of the water flowing through the respective cooling lines.

In certain examples, the cooling system 200 may also include a process heating system in fluid connection with the one or more cooling loops. The process heating system may be configured to heat the water flowing through the cooling loops, thus preventing the water from freezing. In certain examples, one or more immersion heaters are positioned within one or more coolant vessels in the plant, such as the water/oxygen separator. Additionally, or alternatively, in certain examples, coolant/water may be configured to be transferred or flow through an independent heater. Additionally, or alternatively, in certain examples, heat trace may be positioned underneath insulation certain piping locations within the cooling loop to heat the water.

In certain examples, the cooling system 200 may further include a cooler quick drain system in fluid connection with the anode and/or cathode cooling loops. The cooler quick drain system may be configured to drain the water flowing through the cooling loops such as to prevent the plurality of dry coolers in the cooling modules from freezing. In certain examples, isolation valves (e.g., independently controlled, automatic or manual isolation valves) may be used to prevent coolant/water from flowing into or out of one or more dry coolers. In certain examples, drain valves (e.g., independently or jointly controlled automatic or manual bleed and drain valves) may then be used to remove water from one or more dry coolers. In some examples, one or more dry coolers may be configured to be pressurized using a gas (e.g., nitrogen) to assist with the draining process. This may be particularly advantageous when coolant/water is removed from one or more dry coolers via their normal coolant outlets, thereby simplifying the piping and preventing coolant/water from becoming waste.

As mentioned above, the cooling system 200 may further include a controller 270 and a data acquisition unit 272. The controller 270 may be in communication with the pressure sensors, the flow control valves, the pressure regulators, and any additional sensors within the system. The data acquisition unit 272 may be operable to measure, monitor, and/or receive system data in real-time.

In certain examples, the controller 270 may be configured to control a pressure of the water flowing through the cooling lines of the cathode and anode cooling loops via an adjustment to at least one pressure regulator of the anode and cathode cooling loops. The controller 270 may further be configured to control a flow rate of the water flowing through the cooling lines of the cathode and anode cooling loops via an adjustment to at least one flow control valve of the anode and cathode cooling loops. Additionally, the controller 260 may be configured to control the process heating system to heat the water flowing through the anode and/or cathode cooling loops and the cooler quick drain system to drain the water flowing through the anode and/or cathode cooling loops.

In certain examples, one or more control valves within the cathode and anode cooling loops may be configured to control a flow rate of the water entering and/or leaving the plurality of coolers. The flow rate of the water entering and/or leaving the coolers may be any configurable flow rate taking into consideration the operating parameters of the electrochemical system. In certain examples, the flow rate may be at least 0.1 liters/minute (L/min), at least 1 L/min, at least 10 L/min, at least 100 L/min, at least 200 L/min, at least 1000 L/min, at least 2000 L/min, in a range of 0.1-2000 liters per minute (L/min), 10-2000 L/min, 100-2000 L/min, 0.1-200 L/min, 1-200 L/min, 10-200 L/min, 0.1-1000 L/min, 1-1000 L/min, or 10-1000 L/min.

Furthermore, in certain examples, a pressure sensor may be configured to transmit the pressure reading to the data acquisition unit 272 and the data acquisition unit 272 may then transmit the information to the controller 270 so that the pressures within the cooling lines of the cathode cooling loop and the anode cooling loop may be controlled. In other words, a controller in communication with the pressure sensor may be configured to send a signal to either the pressure regulator or flow control valve to open the valve (partially or fully) when the pressure reading exceeds a predefined threshold level. Additionally, the controller 270 may be configured to send a signal to either the pressure regulator or flow control valve to close the valve (partially or fully) when the pressure level drops below a predefined threshold level.

The controller 270 is further configured to regulate the flow rate of the water within the cathode and anode cooling loops for the purpose of cooling the plurality of electrochemical stacks of the electrolysis module. For instance, the controller 270 can receive data from sensors placed along the loops. Using this data, the controller 270 determines the optimal temperature and pressure needed for effectively cooling the plurality of electrochemical stacks of the electrolysis module, e.g., using a minimum amount of energy consumption in the cooling process. In other words, the cooling system is configured to operate at the determined optimal temperature needed for cooling the plurality of electrochemical stacks of the electrolysis module.

Subsequently, the controller 270 fine-tunes the pressure and temperature of the water, using the pressure regulators and control valves, based on the identified optimal temperature and pressure before supplying the water to the plurality of electrochemical stacks connected to the cooling loops. Moreover, the controller 270 has the capability to adjust the characteristics of the water, utilizing pressure regulators and control valves, to provide a consistent water temperature and pressure provided to the electrochemical stacks.

In certain examples, the cathode cooling loop is configured to provide water to the cathode side of the plurality of electrochemical stacks from the plurality of coolers at water temperature in a range of 20-50°C, in a range of 20-40°C, or in a range of 30-50°C. Further, the same cooling loop is configured to receive water from the cathode side of the plurality of electrochemical stacks at the plurality of coolers at a water temperature in a range of 50-90°C, in a range of 50-80°C, in a range of 50-70°C, in a range of 60-90°C, in a range of 60-80°C, or in a range of 70-90°C. Through the coolers, the water temperature is configured to be lowered to a desired temperature to effectively cool the plurality of electrochemical stacks at the cathode side in the next cycle or circulation of water. As such, the water temperature exiting from the plurality of coolers needs to be low enough to provide the desired heat exchange at the cathode side of the plurality of electrochemical stacks in the electrolysis module, but should not be too low that unnecessary or excess energy is being used within the plurality of coolers to facilitate the temperature decrease of the water. Therefore, a maximum or optimal target temperature for the water leaving the coolers should be identified that can provide effective cooling while minimizing energy/operating costs.

In certain examples, the anode cooling loop is configured to provide water to the anode side of the plurality of electrochemical stacks from the plurality of coolers at water temperature in a range of 20-50°C, in a range of 20-40°C, or in a range of 30-50°C. Further, the same cooling loop is configured to receive water from the anode side of the plurality of electrochemical stacks at the plurality of coolers at a water temperature in a range of 50-90°C, in a range of 50-80°C, in a range of 50-70°C, in a range of 60-90°C, in a range of 60-80°C, or in a range of 70-90°C. Through the coolers, the water temperature is configured to be lowered to a desired temperature to effectively cool the plurality of electrochemical stacks at the anode side in the next cycle or circulation of water. As such, the water temperature exiting from the plurality of coolers needs to be low enough to provide the desired heat exchange at the anode side of the plurality of electrochemical stacks in the electrolysis module, but should not be too low that unnecessary or excess energy is being used within the plurality of coolers to facilitate the temperature decrease of the water. Therefore, a maximum or optimal target temperature for the water leaving the coolers should be identified that can provide effective cooling while minimizing energy/operating costs.

### Methods of Cooling an Electrochemical Plant

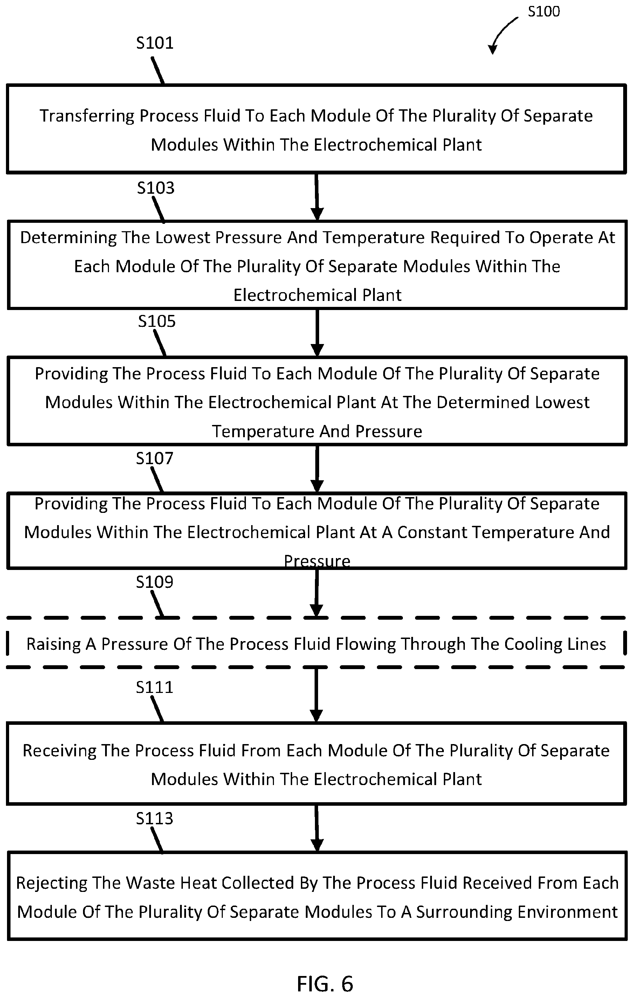

Figure 6 depicts a flowchart describing a method for cooling a plurality of separate modules of the electrochemical plant. In act S101, the one or more cooling modules are configured to transfer coolant/water along a cooling loop to the plurality of separate modules of the electrochemical plant. Specifically, the dry coolers or wet coolers of the one or more cooling modules are configured to transfer the coolant/water via the cooling loop to each module of the plurality of separate modules.

In act S103, the controller determines an optimal temperature and pressure required to effectively cool both the electrolysis module and the power supply module. This may refer to a highest coolant temperature provided to each of the modules that can effectively cool each module, therein providing the minimum power consumption cost in the operation of the coolers for the cooling process. For example, the controller identifies the optimal cooling conditions that meet the specific requirements of modules within the electrochemical plant by measuring process conditions at each separate module and comparing the pressure and temperatures at each module to each other and identifying the coolant temperature and pressure required for a minimum amount of energy consumption in the cooling of the plurality of modules within the electrochemical plant.

In act S105, the controller causes the one or more cooling modules to provide the coolant/water to both the electrolysis module and the power supply module at the determined optimal temperature and pressure. In other words, the controller controls the plurality of dry coolers or wet coolers of the one or more cooling modules to provide the coolant/water to both the electrolysis module and the power supply module at the determined optimal temperature and pressure, e.g., using a minimum amount of energy consumption in the cooling process.

In act S107, the controller causes the one or more cooling modules to provide the coolant/water to both the electrolysis module and the power supply module at a constant optimal temperature and pressure. In other words, the controller controls the plurality of dry coolers or wet coolers of the one or more cooling modules to provide the coolant/water to both the electrolysis module and the power supply module at the constant optimal temperature and pressure, e.g., using a minimum amount of energy consumption in the cooling process.

In act S109, the controller may, optionally, cause at least one pump to raise a pressure of the coolant/water flowing through the cooling lines.

In act S111, the dry cooler or wet coolers of the one or more cooling modules receive the coolant/water via the cooling loop from both the electrolysis module and the power supply module.

In act S113, the dry coolers or wet coolers of the one or more cooling modules reject the waste heat collected by the coolant/water received from each module of the plurality of separate modules to a surrounding environment.

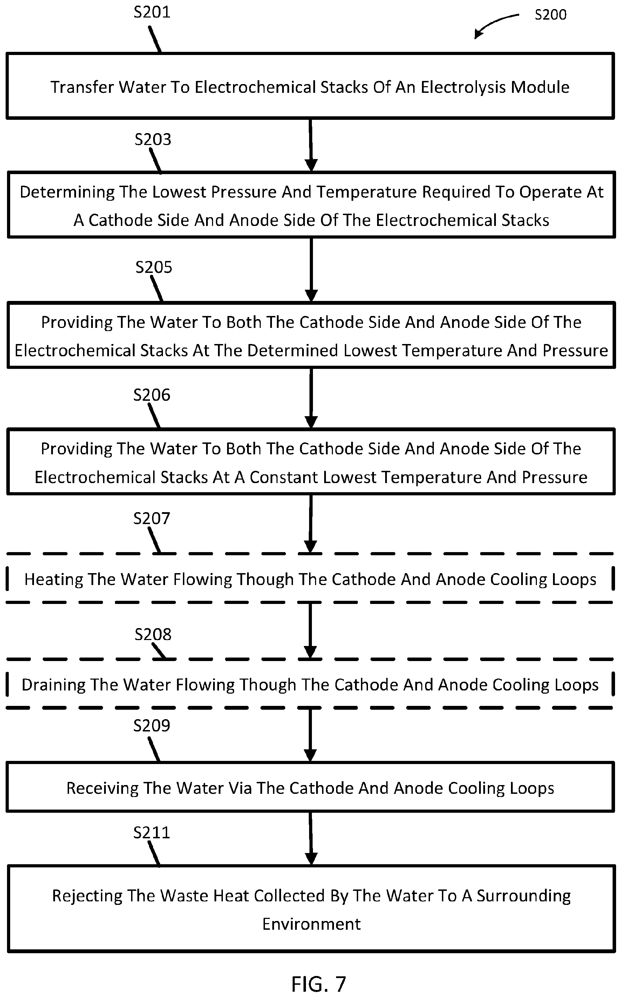

Figure 7 depicts a flowchart describing a method for cooling a cathode side and an anode side of a plurality of electrochemical stacks of an electrolysis module of an electrochemical plant using another embodiment of a cooling system.

In act S201, the one or more cooling modules are configured to transfer a coolant (e.g., water) via the cathode cooling loop to the cathode side of the plurality of electrochemical stacks, and transfer water via the anode cooling loop to the anode side of the plurality of electrochemical stacks of the electrolysis module.

In act S203, the controller determines an optimal temperature and pressure required to effectively cool both the cathode side and anode side of the plurality of electrochemical stacks in the electrolysis module. This may refer to a highest water temperature provided to the cathode side and anode side of the plurality of electrochemical stacks that can effectively cool both, therein providing the minimum power consumption cost in the operation of the coolers for the cooling process. For example, the controller identifies the optimal cooling conditions that meet the specific requirements of the cathode side and anode side of the plurality of electrochemical stacks within the electrochemical plant by first measuring the pressures and temperatures at each separate side and comparing the pressure and temperatures at each side to each other, and, e.g., identifying the operating temperature and pressure required for a minimum amount of energy consumption in the cooling of the cathode side and anode side of the plurality of electrochemical stacks within the electrochemical plant.

In act S205, the controller causes the one or more cooling modules to provide the water to both the cathode side and anode side of the plurality of electrochemical stacks in the electrolysis module at the determined optimal temperature and pressure. In other words, the controller controls the plurality of dry coolers or wet coolers of the one or more cooling modules to provide the water to both the cathode side and anode side of the plurality of electrochemical stacks at the determined optimal temperature and pressure, e.g., using a minimum amount of energy consumption in the cooling process.

In act S206, the controller causes the one or more cooling modules to provide the water to both the cathode side and anode side of the plurality of electrochemical stacks in the electrolysis module at a constant optimal temperature and pressure. In other words, the controller controls the plurality of dry coolers or wet coolers of the one or more cooling modules to provide the water to both the cathode side and anode side of the plurality of electrochemical stacks at the constant optimal temperature and pressure, e.g., using a minimum amount of energy consumption in the cooling process.

In act S207, the controller may optionally control the process heating system to heat the water flowing through the cooling loops, thus preventing the water from freezing.

In act S208, the controller may optionally control the cooler quick drain system to drain the water flowing through the cooling loops such as to prevent the water flowing inside the cooling loops from freezing.

In act S209, the dry cooler or wet coolers of the one or more cooling modules receive the water via the cooling loop from both the cathode side and anode side of the plurality of electrochemical stacks of the electrolysis module.

In act S211, the dry coolers or wet coolers of the one or more cooling modules reject the waste heat collected by the water received from each of the cathode side and anode side of the plurality of electrochemical stacks to a surrounding environment.

### Controlling Operation of the Cooling System

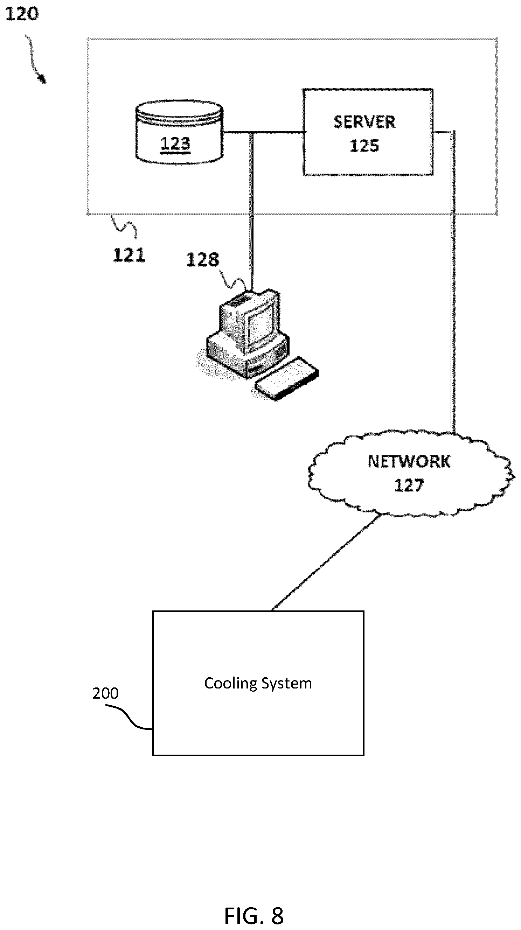

Figure 8 illustrates an exemplary system 120 for controlling operation of a cooling system 200 for an electrochemical plant. The system 120 includes the cooling system 200 (such as depicted in Figures 4 and 5), a monitoring system 121, a workstation 128, and a network 127. Additional, different, or fewer components may be provided.

The monitoring system 121 includes a server 125 and a database 123. The monitoring system 121 may include computer systems and networks of a system operator (e.g., the operator of the cooling system 200). The server database 123 may be configured to store information regarding the operating conditions or setpoints for optimizing the performance of the cooling system 200.

The monitoring system 121, the workstation 128, and the cooling system 200 are coupled with the network 127. The phrase "coupled with" is defined to mean directly connected to or indirectly connected through one or more intermediate components. Such intermediate components may include hardware and/or software-based components.

The optional workstation 128 may be a general-purpose computer including programming specialized for providing input to the server 125. For example, the workstation 128 may provide settings for the server 125. The workstation 128 may include at least a memory, a processor, and a communication interface.

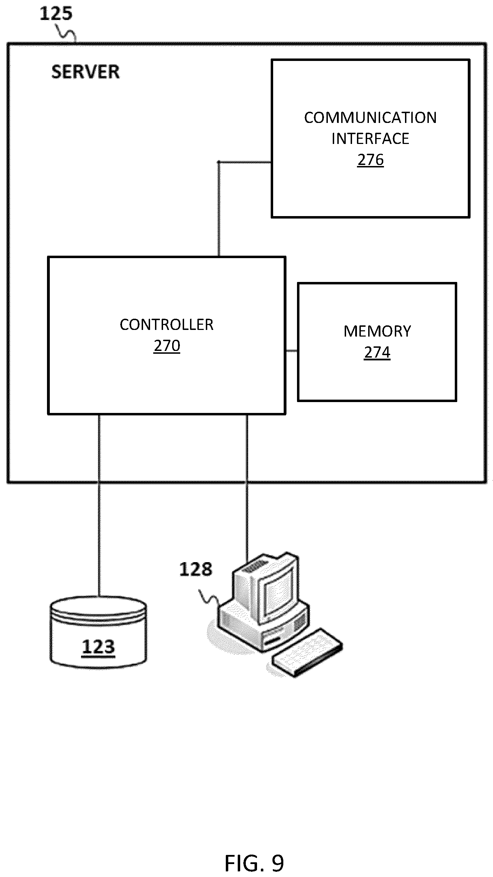

Figure 9 illustrates an exemplary server 125 of the system of Figure 8. The server 125 includes a memory 274, a controller or processor 270, and a communication interface 276. The server 125 may be coupled to a database 123 and a workstation 128. The workstation 128 may be used as an input device for the server 125. The communication interface 276 receives data indicative of use inputs made via the workstation 128 or a separate electronic device.

The controller or processor 270 may include a general processor, digital signal processor, an application specific integrated circuit (ASIC), field programmable gate array (FPGA), analog circuit, digital circuit, combinations thereof, or other now known or later developed processor. The controller or processor 270 may be a single device or combination of devices, such as associated with a network, distributed processing, or cloud computing that is configured to control operation of one or more components of the cooling system 200.

The memory 274 may be a volatile memory or a non-volatile memory. The memory 274 may include one or more of a read only memory (ROM), random access memory (RAM), a flash memory, an electronic erasable program read only memory (EEPROM), or other type of memory. The memory 274 may be removable from the device 122, such as a secure digital (SD) memory card.

The communication interface 276 may include any operable connection. An operable connection may be one in which signals, physical communications, and/or logical communications may be sent and/or received. An operable connection may include a physical interface, an electrical interface, and/or a data interface. The communication interface 276 provides for wireless and/or wired communications in any now known or later developed format.

In the above-described examples, the network 127 may include wired networks, wireless networks, or combinations thereof. The wireless network may be a cellular telephone network, an 802.11, 802.16, 802.20, or WiMax network. Further, the network 127 may be a public network, such as the Internet, a private network, such as an intranet, or combinations thereof, and may utilize a variety of networking protocols now available or later developed including, but not limited to TCP/IP based networking protocols.

While the non-transitory computer-readable medium is described to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding, or carrying a set of instructions for execution by a processor or that cause a computer system to perform any one or more of the methods or operations disclosed herein.

In a particular non-limiting example, the computer-readable medium can include a solid-state memory such as a memory card or other package that houses one or more non-volatile read-only memories. Further, the computer-readable medium can be a random-access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative example, dedicated hardware implementations, such as application specific integrated circuits, programmable logic arrays and other hardware devices, can be constructed to implement one or more of the methods described herein. Applications that may include the apparatus and systems of various examples can broadly include a variety of electronic and computer systems. One or more examples described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionalities as described herein.

Although the present specification describes components and functions that may be implemented in particular embodiments with reference to particular standards and protocols, the claim scope is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having similar functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this application, the term "circuitry" or "circuit" refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

Processors suitable for the execution of a computer program include, by way of example, both general and special purpose microprocessors, and anyone or more processors of any digital computer. The processor may receive instructions and data from a read only memory or a random-access memory or both. The essential elements of a computer are a processor for performing instructions and one or more memory devices for storing instructions and data. The computer may also include or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media, and memory devices, including by way of example semiconductor memory devices, e.g., E PROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a device having a display, e.g., a CRT (cathode ray tube), LCD (liquid crystal display), or LED (light emitting diode) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server may be remote from each other and may interact through a communication network. The relationship of client and server arises by virtue of computer programs running on the respective computers and having a client-server relationship with each other.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

As used herein, the singular forms "a," "an," and "the" include plural referents unless the context clearly dictates otherwise.

As used herein, "for example," "for instance," "such as," or "including" are meant to introduce examples that further clarify more general subject matter. Unless otherwise expressly indicated, such examples are provided only as an aid for understanding embodiments illustrated in the present disclosure and are not meant to be limiting in any fashion. Nor do these phrases indicate any kind of preference for the disclosed embodiment.

Among others, the following reference signs are used in the drawings:
22 - Power electronics
24 - Power distribution center
26 - Electrolysis Module
28 - RO/DI Unit
30 - Oxygen Separator
32 - Makeup Water Module
34 - Makeup Water Tank
36 - Hydrogen Separator
38 - Hydrogen Cooler Module
40 - Anode Water Pump Module
42 - Cooling Water Pump Module
44 - Cathode Water Pump Module
46 - Cathode Pumps
48 - Air Compressor
50 - Chiller
52 - Dry Cooler
54 - Utility Water
56 - Waste Water
58 - Vent Stack
60 - Hydrogen Product
62 - N2 Rack
64 - Enclosure

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the disclosure. The claims should not be read as limited to the described order or elements unless stated to that effect. Therefore, all embodiments that come within the scope of the following claims and equivalents thereto are claimed as the disclosure.

## Claims

1. A cooling system for an electrochemical plant, the cooling system comprising:
one or more cooling modules, wherein each cooling module of the one or more cooling modules comprises a plurality of dry coolers configured to transfer process water and reject waste heat generated in a plurality of separate modules of the electrochemical plant; and
a manifold configured to connect the plurality of dry coolers in the one or more cooling modules in parallel, the manifold comprising at least one fluid inlet and at least one fluid outlet,
wherein the one or more cooling modules are configured to transfer the process water to each module of the plurality of separate modules of the electrochemical plant, and
wherein the one or more cooling modules are configured to receive the process water from each module of the plurality of separate modules and reject the waste heat collected by the process water received from each module of the plurality of separate modules to a surrounding environment.

2. The cooling system of claim 1, further comprising:
a cooling loop comprising cooling lines configured to connect a process water inlet of the at least one fluid inlet and a process water outlet of the at least one fluid outlet of the manifold with each module of the plurality of separate modules of the electrochemical plant.

3. The cooling system of claim 1 or 2, further comprising:
a pipe header positioned between the manifold and the one or more cooling modules of the electrochemical plant,
wherein each cooling module of the one or more cooling modules is configured to be separately disconnected from the pipe header such that a respective cooling module is interchangeable with a new, separate cooling module.

4. The cooling system of any of the preceding claims, wherein the plurality of separate modules comprises an electrolysis module and a power supply module.

5. The cooling system of claim 4, wherein the electrolysis module comprises a plurality of electrochemical stacks.

6. The cooling system of claim 5, wherein each electrochemical cell within a respective electrochemical stack of the plurality of electrochemical stacks is configured to operate with 200 mV or less of pure resistive loss when operating at a current density of at least 3 Amps/cm².

7. The cooling system of claim 5 or 6, wherein each electrochemical stack of the plurality of electrochemical stacks is connected via a same anode inlet water supply and a same anode outlet water supply.

8. The cooling system of any of claims 5-7, wherein the process water is configured to flow from the plurality of electrochemical stacks to the one or more cooling modules.

9. The cooling system of any of claims 5-8, wherein the one or more cooling modules are configured to receive the process water from the plurality of electrochemical stacks and reject the waste heat collected by the process water received from the plurality of electrochemical stacks to the surrounding environment.

10. The cooling system of any of claims 5-9, further comprising:
a process heating system configured to prevent the process water flowing between the plurality of electrochemical stacks and the one or more cooling modules from freezing.

11. The cooling system of any of claims 5-10, further comprising:
a cooler quick drain system configured to drain the process water flowing between the plurality of electrochemical stacks and the one or more cooling modules such as to prevent the process water from freezing.

12. The cooling system of any of claims 5-11, further comprising:
at least one pressure regulator, at least one flow control valve, or a combination of at least one pressure regulator and at least one flow control valve configured to control the process water flowing between the plurality of electrochemical stacks and the one or more cooling modules.

13. The cooling system of claim 12, further comprising:
a controller configured to:
control a pressure of the process water flowing though respective cooling lines via an adjustment to the at least one pressure regulator; and
control a flow rate of the water flowing though the respective cooling lines via an adjustment to the at least one flow control valve.

14. The cooling system of claim 13, wherein the controller is further configured to raise the pressure of the process water via an adjustment to at least one pump positioned within the cooling system.

15. The cooling system of any of claims 1-11, further comprising:
at least one pressure regulator, at least one flow control valve, or a combination of at least one pressure regulator and at least one flow control valve configured to control the process water flowing through the cooling system.
